# EUROPEAN PATENT SPECIFICATION

(11) **EP 3 060 368 B1**
(45) Date of publication and mention of the grant of the patent: **14.03.2018**
(21) Application number: 14790358.7
(22) Date of filing: 02.09.2014
(51) Int. Cl.: F16D 21/06, F16D 47/04

(54) **TRANSMISSION SYSTEM WITH TWO COAXIAL SHAFTS**
ÜBERTRAGUNGSSYSTEM MIT ZWEI KOAXIALEN WELLEN
SYSTÈME DE TRANSMISSION AYANT DEUX ARBRES COAXIAUX

(30) Priority: 04.09.2013 IT CR20130019
(43) Date of publication of application: 31.08.2016
(73) Proprietor: ITAL RESEARCH & INNOVATION S.R.L., 26013 Crema (CR) (IT)
(72) Inventor: PEDRAZZINI BERTOLAZZI, Marino, I-26020 Madignano (CR) (IT)
(74) Representative: Mari, Marco Giovanni
(86) International application number: PCT/IT2014/000229
(87) International publication number: WO 2015/033367

(56) References cited:
- EP-A1- 1 722 461
- EP-A1- 2 471 425
- WO-A1-2005/101617
- WO-A1-2007/029058
- US-A- 4 883 130
- US-A1- 2012 275 874

## Description

The present invention relates to the sector of multi-function operating machines such as pumps, compressors, fans and aspirators, etc. ..., combined with one another, for use in sectors such as DIY, car maintenance and washing, workshops, cleaning operations including professional cleaning, and so on. In particular, the present invention relates to a transmission system with two coaxial shafts, that can be applied to a "combined" multi-function machine with two or more operating devices, for example a high-pressure pump and an air compressor driven selectively by a single motor, with independent or simultaneous operation.

Patent application No. WO 2005/101617 A1 filed by the same applicant describes a combined working machine.

This machine is driven by a motor, with a selectively reversible direction of rotation, provided with a transmission system with two opposing, independent coaxial shafts, wherein a specific direction of rotation of the motor corresponds to the rotation of one of the shafts, while the other remains stationary, and vice-versa.

This transmission system comprises a first driving shaft and a second driving shaft, aligned along the same axis and separated from one another, protruding from opposite sides of the motor, and connecting means, active in opposite directions, realized for example by means of clockwise and counter-clockwise freewheel clutch, connected between the motor and said shafts.

The free ends of each shaft are associated with an operating machine, so that depending on the direction of rotation applied by the motor, the mechanical power is transferred to one or the other of said two shafts, and said operating machines can be activated selectively and alternately based on needs.

This is an effective solution, enabling two different operating machines to be associated with a single motor so as to create multi-function combined machines, but it also has the disadvantage of extending along the axis of the motor and therefore being quite bulky, of having the power take-offs for the operating machines always on opposing sides of the engine block, in a necessarily symmetrical configuration, and therefore requiring a precise geometric arrangement of the machines with respect to the motor.

Furthermore, this solution allows the simultaneous activation of the two machines and requires the use of a motor with a reversible direction of rotation: this may be electrical only, with an appropriate switch adapted to reverse the direction of rotation, or it may be an internal combustion motor, provided that it is able to rotate in both directions, and therefore only a so-called "two-stroke" type motor. The possibility of using a "four-stroke" engine is therefore excluded.

Alternatively it would be necessary to introduce movement reversing devices to be interposed between the motor means and the transmission shafts, with consequent additional costs and bulk.

Lastly, the discontinuity between the first and second driving shaft may create problems of misalignment and unbalanced rotation.

WO 2007/029058 A1 discloses a transmission system with two coaxial shafts wherein no operating machine is connected to the driving shaft.

The aim of the present invention is to overcome these problems.

More specifically, the main aims of the present invention are to allow the selective activation, including non-simultaneous activation, of several operating machines, using any type of motor, by optimizing the spaces inside the multi-function machine, and also to allow an asymmetrical connection between the motor and the operating machines, and to simplify the entire system for the transmission of movement from one shaft to the other and between said shafts and the operating machines.

These objects are achieved with a transmission system of the type with two coaxial shafts adapted to transfer a driving force from motor means to a plurality of operating machines, wherein said transmission system comprises:
- a first shaft associable to a first operating machine;
- a second shaft, coaxial to said first shaft, associable to a second operating machine,
wherein said motor means are associable to said first shaft and occupies the central portion of the shaft leaving both ends of said shaft free to be connected to an operating machine, and wherein each of said first shaft and of said second shaft is rotatably attached to support means adapted to ensure the mutual coaxiality and free rotation of said first and second shaft,
wherein said second shaft is totally contained within said first shaft and its ends protrude from opposite sides of said first shaft, and said transmission system also comprises:
- at least one first transmission organ, which can be selectively activated, interposed between said first and said second shaft, adapted to allow the transfer of a torque force, produced by said motor means, from said first shaft to said second shaft,
- at least one second transmission organ, which can be selectively activated, interposed between said first shaft which said motor means are associated with and the corresponding operating machine, adapted to allow the transfer of a torque force, produced by said motor means, from said first shaft to said operating machine.

In a particularly preferred embodiment of the invention, said first shaft is the outer shaft and is the shaft belonging to said motor means, and said second shaft is the inner shaft which passes through it completely.

Alternatively, said at least one first transmission organ and at least one second transmission organ, which can be selectively activated, are chosen from transmission organs that may be active in only one or in both directions of rotation.

According to a first embodiment of the invention, said motor means comprise an electric motor, a hydraulic motor or an internal combustion engine with a reversible direction of rotation. Alternatively, said motor means comprise an internal combustion engine with only one direction of rotation.

In a preferred embodiment of the invention, said motor means comprise an electric motor with a reversible direction of rotation and said first shaft is the shaft of the rotor of said electric motor.

According to possible embodiments of the invention, said first and said second transmission organs, which can be selectively activated, comprise a freewheel clutch, or a magnetic or mechanical clutch.

According to another embodiment of the invention, said support means comprise bearings.

According to a particular embodiment of the invention, said transmission system comprises a clutch interposed between said motor means and the shaft they are associated with, adapted to allow the transfer of movement to be interrupted without having to switch off said motor means.

The main advantage of the invention lies therefore in its structural simplicity and in the smaller size of the transmission system, which does not require excessively large spaces inside multi-function machines, since it is in the form of a "shaft within a shaft".

With a single transmission system it is possible to have, for example, four power take-offs, for four corresponding operating machines, making the combined machine, on which the transmission system is fitted, more functional, balanced and compact.

Even more advantageously, the motor means can be connected, indifferently, to either of said shafts, the outer one or the inner one, depending on needs and on the most convenient geometric arrangement inside the machine, also taking into account the size and orientation of the operating machines and their attachments to the driving shafts.

Furthermore, by using as the outer shaft the shaft belonging to the motor means and perforating the latter to allow the complete through passage of the inner shaft, the space inside the multi-function machine can be optimized, making available at least two power take-offs (front - rear) on the shaft of the motor means and at least two further power take-offs on the shaft contained within it (at the right end and left end).

Advantageously, thanks to the combination with suitable movement transmission organs, which can be selectively activated, any type of motor can be used, without restriction.

Indeed, thanks to the friction clutches, the operating machines can be driven simultaneously, but also selectively and independently, without any need to reverse the rotation of the motor, and therefore motors with a single direction of rotation can also be used.

Even more advantageously, the invention avoids the use of inverters between the motor means and the transmission system, and the consequent drawbacks that would be involved in terms of production costs and times.

Thanks to the use of freewheel clutch, the invention can be constructed using low-cost components, and with a few simple modifications that can be applied to devices already in existence and available on the market.

The advantages of the invention will become more apparent from the following description of preferred embodiments thereof, provided by way of non-limiting example, and with the aid of figures, wherein:

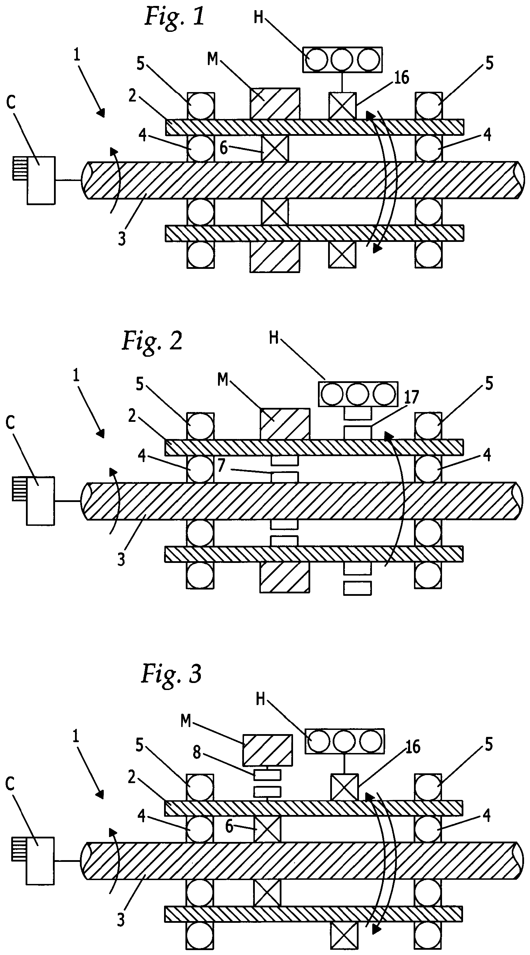

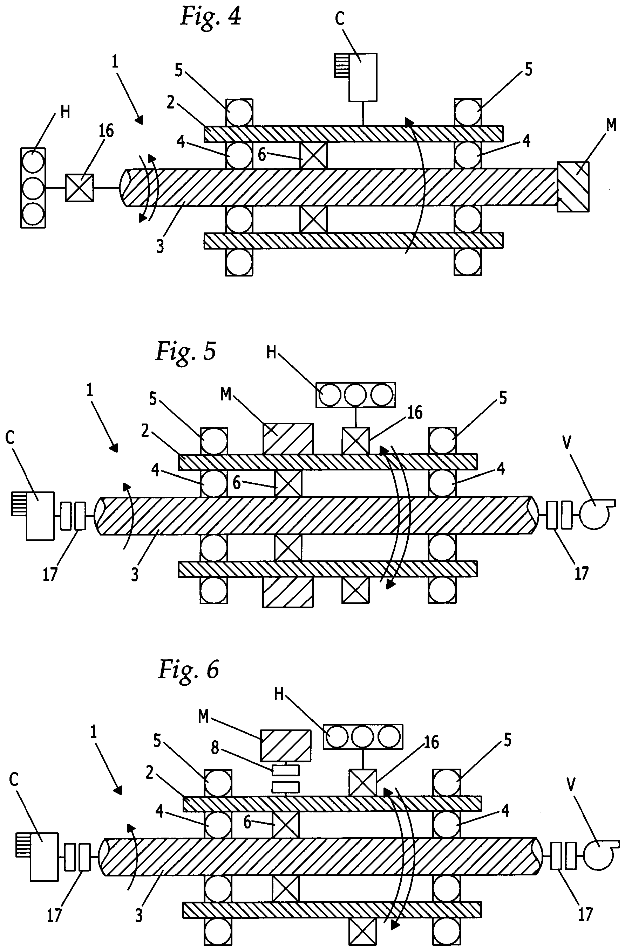

Figures 1-8 show example illustrations of possible embodiments of the transmission system with two coaxial shafts according to the invention, applicable to any combined machine, wherein the embodiment shown in figure 4 is not part of the invention.

The illustrations shown in figures 1-4 show a transmission system 1 with two coaxial shafts, adapted to transfer a driving force from motor means M to a plurality of operating machines H, C.

Said transmission system 1, in all the embodiments shown, essentially comprises:
- a first shaft 2 associated with a first operating machine H;
- a second shaft 3, coaxial to said first shaft 2, associated with a second operating machine C;
- support means 4, 5 connected to said shafts, adapted to ensure the mutual coaxiality and free rotation of the shafts in both directions.

The operating machines illustrated and associated with said shafts are, for example, a high-pressure pump H and a compressor C, but other operating machines may also be mounted, such as an aspirating fan, a circular saw, a generator, a lawn mower, a cement mixer, etc.

Said support means 4, 5 are formed, for example, by means of ball or roller bearings, adapted to support and keep perfectly aligned the two shafts 2, 3 and reduce rotation friction between them.

In the embodiments shown, said second shaft 3 is the inner shaft and is contained inside said first shaft 2, which is therefore the outer shaft in the transmission system 1, and the ends of said inner second shaft 3 protrude from said first shaft 2 on opposing sides. The axes of rotation of said first shaft 2 and said second shaft 3 coincide.

Said transmission system 1 also comprises a first organ 6, 7 and a second organ 16, 17 for the transmission of movement.

In particular, said first transmission organ, which can be selectively activated, is interposed between said first shaft 2 and said second shaft 3.

Said first transmission organ 6, 7, when active, is adapted to transfer from one shaft to the other the torque force produced by said motor means M, so as to be able to drive both operating machines H, C even simultaneously.

Said second transmission organ 16, 17, which can be selectively activated, is interposed between said first shaft 2, with which said motor means M are associated, and the corresponding operating machine H, and is adapted to allow the transfer of the torque force, produced by said motor means M, from said first shaft 2 to the operating machine.

Said motor means M may be indifferently associated with one of said shafts 2, 3.

In the embodiments shown in Figures 1-3, the motor means M are associated with the first shaft 2, on the outside, but alternatively, as shown in Figure 4, which shows an embodiment that is not part of the invention, they may be connected to said second shaft 3, on the inside, which in turn transmits movement to the outer shaft by means of the transmission organ that can be selectively activated, thereby achieving the same benefits from the invention.

The motor means M, in all embodiments shown in Figures 1-4, may be connected to one of the shafts 2, 3 either directly or by means of further known transmission means, for example of the belt, chain, gear type, etc...

In the example shown in Figure 1 the motor means M comprise an electric motor with a double direction of rotation.

In this case, said first transmission organ and said second transmission organ are formed of freewheel clutch 6, 16 with a reverse active direction of rotation, which makes it possible to selectively and independently drive one or the other operating machine H, C.

In one direction of rotation of the motor M, for example in a clockwise direction, the freewheel clutch 16 placed between said first shaft 2 and the corresponding operating machine H engages with and transmits movement to it, thereby driving it. The freewheel clutch 6 placed between the two shafts can turn freely and does not do any work.

In the opposite direction of rotation - counter-clockwise - the freewheel clutch 16 can turn freely, while the freewheel clutch 6 is engaged, and transmits movement from said first shaft 2 to said second shaft 3 and thus to the corresponding operating machine C.

The drawing shown in Figure 2, while maintaining the same main aforesaid features, includes the use of a motor M with a single direction of rotation of said first shaft 2, for example a four-stroke internal combustion engine.

In this embodiment, said first and said second transmission organs comprise electro-magnetic clutches 7, 17.

In substance, these are devices with a mechanical engagement which can be triggered simply by supplying an electric current. Typically there are two steel clutch wheels, in the case of said first transmission organ one being placed on the inner surface of said first shaft and one on the outer surface of said second shaft, separated by a space of a few tenths of a millimetre, and which are brought into contact by the magnetic field generated by a special coil.

Advantageously with the use of clutches 7, 17, it is also possible to activate both operating machines H, C simultaneously.

Electro-magnetic clutches are preferred for their low cost, for the speed of engagement/disengagement, and because complicated, more costly pneumatic or hydraulic systems are not required. Alternatively, mechanical clutches or even automatic clutches can also be used, for example with clutch engagement triggered by the centrifugal force above a certain speed. In general, any known type of clutch can be used for the invention.

The transmission system shown in Figure 3 has a layout similar to that shown in Figure 1, apart from the fact that the outer shaft 2 is not directly connected to the motor means M, which also in this case comprise an electric motor, but feature the interposition of an additional clutch 8. Said clutch 8 enables the motor M to be "detached" without switching it off, by completely disconnecting the motor M from both shafts 2, 3 and both the operating machines H, C connected to the traction system 1. If present, the clutch 8 is preferably of the magnetic type.

The transmission system 1 illustrated in Figure 3, thanks to the distribution of the components, allows the motor means M to be connected to one or more transmission systems 1 according to the invention. In this case, the transmission systems are connected to one another by means of a known type of mechanical transmission system, for example a belt system. In his way it is possible to multiply the operating machines that can be associated with a single motor, by means of a plurality of transmission systems 1 connected to one another.

In all the Figures 1-4 only two operating machines are show, one for each shaft, but it is evident, for example, that each end of each shaft can be associated with an operating machine.

As mentioned above, since said second shaft 3 completely passes through said first shaft 2, both ends of the inner shaft protrude from the outer shaft and can therefore be connected to additional operating machines.

In particular, Figures. 5 and 6 respectively show the transmission systems illustrated in Figures 1 and 3 but with the difference that a third operating machine - an aspirating fan V - has been added, once again provided on the inner shaft 3.

To allow the independent operation of the three operating machines H, C, V, it is necessary to interpose two electro-magnetic clutches 17 between said second shaft 3 and the machines C, V, that take their power therefrom.

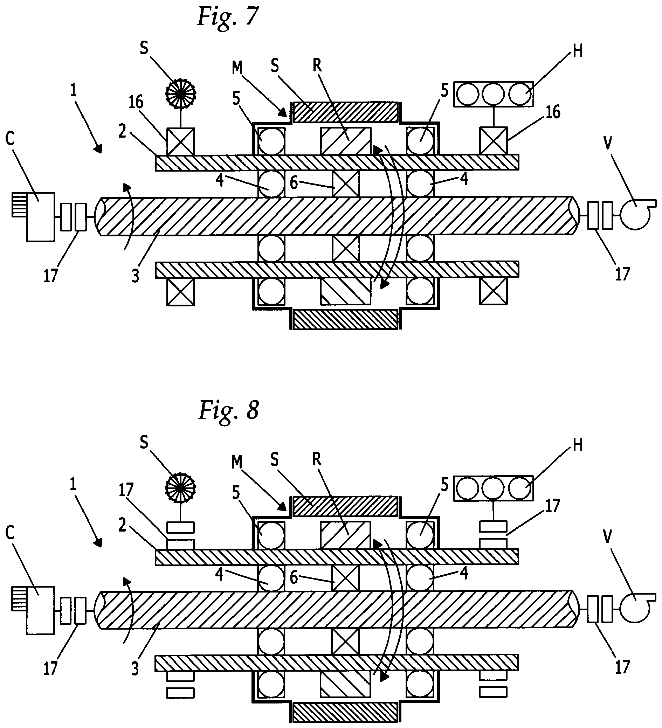

With particular reference to Figures 7 and 8, a transmission system 1 is illustrated in which the motor means comprise an electric motor, and said first shaft 2, placed on the outside of the transmission system 1, is the shaft of the rotor R, free to rotate inside the stator S of the electric motor, which is also kept aligned by special support bearings 5.

In these embodiments, the electric motor block occupies the central section of the shaft 2, leaving both ends free to be connected to an operating machine H, S.

Figures. 7 and 8, therefore, illustrate the more complex embodiments of the transmission system 1 that, with a single electric motor, can activate even four or more operating machines, either simultaneously or not: for example, a compressor C and an aspirating fan V are provided at the ends of the inner shaft 3, in the manner described above for the embodiments shown in Figures 5 and 6; meanwhile, a pump H and a circular saw S are provided at the ends of the outer shaft 2, or the shaft of the rotor R.

In this case, too, in order to allow the machines to operate independently, freewheel clutch 16 are provided, or clutches 1, interposed between said outer shaft 2 and the machines H, S that take their power therefrom.

In all the embodiments illustrated, for each transmission system only one type of transmission organ is used, whether it be freewheel clutch or clutches. Nevertheless, the person skilled in the sector is aware of the possibility of combining different transmission organs in a single system, and therefore using any combination of freewheel clutch, clutches, belts, gears, etc..

The invention can therefore be applied as a transmission kit to create combined and multi-purpose machines, equipped with any type of motor, thereby achieving the aims described above. It is evident that the application possibilities are not limited to the operating machines mentioned, but can potentially be extended to any machine that can be usefully operated using the selected transmission system and motor.

## Claims

1. A transmission system (1) of the type with two coaxial shafts adapted to transfer a driving force from motor means (M) to a plurality of operating machines (H, C, S, V), wherein said transmission system comprises:
- a first shaft (2) associable to a first operating machine (H);
- a second shaft (3), coaxial to said first shaft (2), associable to a second operating machine (C),
wherein said motor means (M) are associable to said first shaft (2) and occupies the central portion of the shaft (2) leaving both ends of said shaft free to be connected to an operating machine, and wherein each of said first shaft (2) and of said second shaft (3) is rotatably attached to support means (4, 5) adapted to ensure the mutual coaxiality and free rotation of said first and second shaft (2, 3),
wherein said second shaft (3) is totally contained within said first shaft (2) and its ends protrude from opposite sides of said first shaft (2), and said transmission system (1) also comprises:
- at least one first transmission organ (6, 7) which can be selectively activated, interposed between said first (2) and said second (3) shaft, adapted to allow the transfer of a torque force, produced by said motor means (M), from said first shaft (2) to said second shaft (3),
- at least one second transmission organ (16, 17) which can be selectively activated, interposed between said first shaft (2) which said motor means (M) are associated with and the corresponding operating machine (H, C), adapted to allow the transfer of a torque force, produced by said motor means (M), from said first shaft (2) to said operating machine (H, C).

2. The transmission system (1) according to claim 1, **characterized in that** said first shaft (2) is the outer shaft and is the shaft belonging to said motor means (M), and said second shaft (3) is the inner shaft which passes through it completely.

3. The transmission system (1) according to claims 1 or 2, **characterized in that** said at least one first transmission organ (6, 7) and at least one second transmission organ (16, 17), which can be selectively activated, are chosen from transmission organs that may be active in only one or in both directions of rotation.

4. The transmission system (1) according to claim 1, **characterized in that** said motor means (M) comprise an electric motor, a hydraulic motor or an internal combustion engine with a reversible direction of rotation.

5. The transmission system (1) according to claim 1, **characterized in that** said motor means (M) comprise an internal combustion engine with only one direction of rotation.

6. The transmission system (1) according to claims 2 and 4, **characterized in that** said motor means (M) comprise an electric motor with a reversible direction of rotation, and said first shaft (2) is the shaft of the rotor (R) of said electric motor.

7. The transmission system (1) according to claim 3, **characterized in that** said first and said second transmission organs, which can be selectively activated, comprise a freewheel clutch (6, 16).

8. The transmission system (1) according to claim 3, **characterized in that** said first and said second transmission organs, which can be selectively activated, comprise a magnetic or mechanical clutch (7, 17).

9. The transmission system (1) according to claim 1, **characterized in that** said support means (4, 5) comprise bearings.

10. The transmission system (1) according to claim 1, **characterized in that** it comprises a clutch (8) interposed between said motor means (M) and the shaft (2, 3) they are associated with, adapted to allow the transfer of movement to be interrupted without having to switch off said motor means (M).

11. A multi-function combined machine comprising motor means (M) and a plurality of operating machines (H, C, S, V), **characterized in that** it comprises at least one transmission system (1) according to at least one of the previous claims.

## Patentansprüche

1. Ein Übertragungssystem (1) des Typs mit zwei koaxialen Wellen, so angepasst, dass sie eine Triebkraft von einer Motoreinrichtung (M) zu einer Mehrzahl von Betriebsmaschinen (H, C, S, V) übertragen, wobei besagtes Übertragungssystem Folgendes umfasst:
- eine erste Welle (2), koppelbar mit einer ersten Betriebsmaschine (H);
- eine zweite Welle (3), koaxial zu besagter erster Welle (2) und koppelbar mit einer zweiten Betriebsmaschine (C),
wobei besagte Motoreinrichtung (M) mit besagter erster Welle (2) koppelbar ist und den mittleren Abschnitt der Welle (2) belegt, sodass beide Enden besagter Welle frei bleiben, um mit einer Betriebsmaschine verbunden zu werden, und wobei jede der besagten ersten Welle (2) und der besagten zweiten Welle (3) drehbar an Stützvorrichtungen (4, 5) befestigt ist, die so angepasst sind, dass sie die gegenseitige Koaxialität sowie die freie Rotation der besagten ersten und zweiten Welle (2, 3) gewährleisten,
wobei besagte zweite Welle (3) vollkommen von besagter erster Welle (2) umfasst ist und ihre Enden aus den entgegengesetzten Seiten der besagten ersten Welle (2) hervorstehen, und wobei besagtes Übertragungssystem (1) außerdem Folgendes umfasst:
- mindestens ein erstes Übertragungsorgan (6, 7), das wahlweise aktiviert werden kann, zwischengeschaltet zwischen besagter erster (2) und besagter zweiter (3) Welle, so angepasst, dass sie die Übertragung eines Drehmoments, das durch besagte Motoreinrichtung (M) erzeugt wird, von besagter erster Welle (2) auf besagte zweite Welle (3) übertragen kann,
- mindestens ein zweites Übertragungsorgan (16, 17), das wahlweise aktiviert werden kann, zwischengeschaltet zwischen der besagten ersten Welle (2), mit der die besagte Motoreinrichtung (M) verbunden ist, und der entsprechenden Betriebsmaschine (H, C), so angepasst, dass sie die Übertragung eines Drehmoments, das durch besagte Motoreinrichtung (M) erzeugt wird, von besagter erster Welle (2) auf besagte Betriebsmaschine (H, C) übertragen kann.

2. Das Übertragungssystem (1) gemäß Anspruch 1, **dadurch gekennzeichnet, dass** besagte erste Welle (2) die äußere Welle ist und die Welle ist, die zu besagter Motoreinrichtung (M) gehört, und besagte zweite Welle (3) die innere Welle ist, die vollkommen durch sie hindurchläuft.

3. Das Übertragungssystem (1) gemäß den Ansprüchen 1 oder 2, **dadurch gekennzeichnet, dass** das besagte mindestens eine erste Übertragungsorgan (6, 7) und das besagte mindestens eine zweite Übertragungsorgan (16, 17), das wahlweise aktiviert werden kann, aus Übertragungsorganen gewählt werden, die nur in eine oder in beide Rotationsrichtungen aktiv sein können.

4. Das Übertragungssystem (1) gemäß Anspruch 1, **dadurch gekennzeichnet, dass** besagte Motoreinrichtung (M) einen Elektromotor, einen hydraulischen Motor oder einen Verbrennungsmotor mit einer reversiblen Rotationsrichtung umfasst.

5. Das Übertragungssystem (1) gemäß Anspruch 1, **dadurch gekennzeichnet, dass** besagte Motoreinrichtung (M) einen Verbrennungsmotor mit nur einer Rotationsrichtung umfasst.

6. Das Übertragungssystem (1) gemäß den Ansprüchen 2 und 4, **dadurch gekennzeichnet, dass** besagte Motoreinrichtung (M) einen Elektromotor mit einer reversiblen Rotationsrichtung umfasst, und dass die besagte erste Welle (2) die Welle des Rotors (R) des besagten Elektromotors ist.

7. Das Übertragungssystem (1) gemäß Anspruch 3, **dadurch gekennzeichnet, dass** besagte erste und zweite Übertragungsorgane, die wahlweise aktiviert werden können, mindestens eine Freilaufkupplung (6, 16) umfassen.

8. Das Übertragungssystem (1) gemäß Anspruch 3, **dadurch gekennzeichnet, dass** besagte erste und zweite Übertragungsorgane, die wahlweise aktiviert werden können, eine magnetische oder mechanische Kupplung (7,17) umfassen.

9. Das Übertragungssystem (1) gemäß Anspruch 1, **dadurch gekennzeichnet, dass** besagte Stützvorrichtungen (4, 5) Lagerungen umfassen.

10. Das Übertragungssystem (1) gemäß Anspruch 1, **dadurch gekennzeichnet, dass** es eine Kupplung (8) umfasst, die zwischen der besagten Motoreinrichtung (M) und der Welle (2, 3) zwischengeschaltet ist, mit der sie verbunden ist, so angepasst, dass sie die Übertragung einer Bewegung ermöglichen kann, ohne besagte Motoreinrichtung (M) ausschalten zu müssen.

11. Eine kombinierte Multifunktionsmaschine, die eine Motoreinrichtung (M) sowie eine Mehrzahl von Betriebsmaschinen (H, C, S, V) umfasst, **dadurch gekennzeichnet, dass** sie mindestens ein Übertragungssystem (1) gemäß mindestens einer der vorhergegangenen Ansprüche umfasst.

## Revendications

1. Système de transmission (1) de type avec deux arbres coaxiaux adapté pour transférer une force motrice à partir de moyens de motorisation (M) vers une multitude de machines opératrices (H, C, S, V), où ledit système de transmission comprend :
- un premier arbre (2) associable à une première machine opératrice (H) ;
- un second arbre (3), coaxial avec ledit premier arbre (2), associable à un seconde machine opératrice (C),
où lesdits moyens de motorisation (M) sont associables audit premier arbre (2) et occupent la portion centrale de l'arbre (2) en laissant les deux extrémités dudit arbre libres pour être raccordées à une machine opératrice, et où chacun dudit premier arbre (2) et dudit second arbre (3) est attaché de manière rotative à des moyens de support (4, 5) adaptés pour assurer la coaxialité mutuelle et la rotation libre desdits premier et second arbre (2, 3),
où ledit second arbre (3) est totalement contenu dans ledit premier arbre (2) et ses extrémités dépassent des côtés opposés dudit premier arbre (2), et ledit système de transmission (1) comprend également :
- un premier organe de transmission au minimum (6, 7) qui peut être sélectivement activé, interposé entre ledit premier (2) et ledit second (3) arbre, adapté pour permettre le transfert d'une force de couple, produite par lesdits moyens de motorisation (M), à partir dudit premier arbre (2) vers ledit second arbre (3),
- un second organe de transmission au minimum (16, 17) qui peut être sélectivement activé, interposé entre ledit premier arbre (2) avec lequel lesdits moyens de motorisation (M) sont associés et la machine opératrice correspondante (H, C), adaptée pour permettre le transfert d'une force de couple, produite par lesdits moyens de motorisation (M), à partir dudit premier arbre (2) vers ladite machine opératrice (H, C).

2. Système de transmission (1) selon la revendication 1, **caractérisé par le fait que** ledit premier arbre (2) est l'arbre extérieur et l'arbre qui appartient auxdits moyens de motorisation (M), et que ledit second arbre (3) est l'arbre intérieur qui y passe complètement à travers.

3. Système de transmission (1) selon les revendications 1 ou 2, **caractérisé par le fait que** ledit premier organe de transmission au minimum (6, 7) et ledit second organe de transmission au minimum (16, 17), qui peuvent être sélectivement activés, sont choisis parmi les organes de transmission qui peuvent être actifs dans une seule ou dans les deux directions de rotation.

4. Système de transmission (1) selon la revendication 1, **caractérisé par le fait que** lesdits moyens de motorisation (M) comprennent un moteur électrique, un moteur hydraulique ou un moteur à combustion interne avec une direction de rotation réversible.

5. Système de transmission (1) selon la revendication 1, **caractérisé par le fait que** lesdits moyens de motorisation (M) comprennent un moteur à combustion interne avec une seule direction de rotation.

6. Système de transmission (1) selon les revendications 2 et 4, **caractérisé par le fait que** lesdits moyens de motorisation (M) comprennent un moteur électrique avec une direction de rotation réversible, et que ledit premier arbre (2) est l'arbre du rotor (R) dudit moteur électrique.

7. Système de transmission (1) selon la revendication 3, **caractérisé par le fait que** ledit premier et ledit second organes de transmissions, qui peuvent être sélectivement activés, comprennent un embrayage à roue libre (6, 16).

8. Système de transmission (1) selon la revendication 3, **caractérisé par le fait que** ledit premier et ledit second organes de transmissions, qui peuvent être sélectivement activés, comprennent un embrayage magnétique ou mécanique (7,17).

9. Système de transmission (1) selon la revendication 1, **caractérisé par le fait que** lesdits moyens de support (4, 5) comprennent des roulements.

10. Système de transmission (1) selon la revendication 1, **caractérisé par le fait qu'**il comprend un embrayage (8) interposé entre lesdits moyens de motorisation (M) et l'arbre (2, 3) auquel ils sont associés, adapté pour permettre l'interruption du transfert de mouvement sans devoir arrêter lesdits moyens de motorisation (M).

11. Une machine combinée multifonction comprenant des moyens de motorisation (M) et une multitude de machines opératrices (H, C, S, V), **caractérisé par le fait qu'**elle comprend au moins un système de transmission (1) selon au moins une des revendications précédentes.
